# EUROPÄISCHE PATENTSCHRIFT

(11) **EP 0 693 256 B1**
(45) Veröffentlichungstag und Bekanntmachung des Hinweises auf die Patenterteilung: **29.04.1998**
(21) Anmeldenummer: 94111108.0
(22) Anmeldetag: 16.07.1994
(51) Int. Cl.: A22C 25/16

(54) **Einrichtung zum Ablösen des Fleisches von dem Grätengerüst von Fischen**
Device for the severing of flesh from the bone skeleton of fish
Dispositif pour détacher la viande du squelette de poissons

(43) Veröffentlichungstag der Anmeldung: 24.01.1996
(73) Patentinhaber: NORDISCHER MASCHINENBAU RUD. BAADER GMBH + CO KG, 23560 Lübeck (DE)
(72) Erfinder: Braeger, Horst, D-23560 Lübeck (DE); Möller, Wolfgang, D-23566 Lübeck (DE)

(56) Entgegenhaltungen:
- DE-A- 1 454 089
- DE-B- 2 946 042
- DE-C- 3 518 960

## Beschreibung

Die Erfindung betrifft eine Einrichtung zum Ablösen des Fleisches von dem Grätengerüst von Fischen, insbesondere im Bereich der Rippen nach dem Freischneiden der Bauch- und Rückenspeichen, mit einem Förderer, der den Fisch mit dem Schwanz voraus fördert, wobei die Führung des Fisches durch in den besagten Freischnitten eingreifende und jeweils die Bauch- bzw. Rückenspeichen in einem Spalt zwischen sich aufnehmende flächige Führungen erfolgt, die untereinander einen seitlichen, durch Führungskanten begrenzten Spalt für die Führung der Rippen oder seitlichen Wirbelfortsätzen im Bereich ihrer Ansätze an der Wirbelsäule ausbilden, mit einem Werkzeug zum Herauslösen der Rippen, bestehend aus je einem, zu beiden Seiten der Bahn der Fische angeordneten und gegen die Förderrichtung im wesentlichen spitz zulaufenden Schabemesser mit einer Schneidkante und einer dieser gegenüberliegenden mit ihr einen Spalt bildenden Gegenlage, sowie mit Mitteln zum Steuern der Schabemesser mit ihrer Spitze aus einem Bereich neben den Führungen für die Bauchspeichen in einen Bereich neben den Führungen für die Rückenspeichen kurz vor Ankunft des vorauslaufenden schwanzseitigen Bauchhöhlenendes des Fisches.

Das Ablösen des Fleisches durch einen Schabeprozeß, insbesondere im Bereich der Rippen, ist bekannt und wird aufgrund der mit diesem Verfahren erreichbaren hohen Ausbeute an Fischfleisch vorzugsweise beim Filetieren mittlerer und großer Fische mit Erfolg angewandt. So findet sich beispielsweise in der DE-PS 29 46 042 eine Einrichtung, deren Kernstück ein Schabewerkzeug mit den vorstehend aufgeführten Merkmalen ist.

Bei der maschinellen Bearbeitung des Naturproduktes Fisch kommt es insbesondere im Hinblick auf die Wirtschaftlichkeit der Bearbeitung darauf an, daß die entsprechenden Bearbeitungsmaschinen in der Lage sind, einen gewissen Größenbereich innerhalb einer Fischart oder auch unterschiedliche Fischarten mit verschiedenen Bauchhöhlenformen und Flankengräten möglichst störungsfrei zu bewältigen. Zwar läßt sich dies mit modernen Bilderfassungs- und Steuermitteln bewerkstelligen, doch sind diese Mittel insbesondere aufgrund der Kosten und der wartungstechnischen Problematik aus der Sicht der hier wirksamen Umweltbedingungen nicht ideal. Daraus leitet sich das Bestreben her, eine attraktive Universalisierung mit einfachen mechanischen Mitteln zu erreichen.

Wie die Praxis erweist, zeigen sich jedoch bei der Verfolgung dieses Grundsatzes unbefriedigend enge Grenzen insbesondere bei dem Arbeitsschritt Rippenschaben, was sich bevorzugt darin äußert, daß einzelne Rippengräten oder Bruchstücke davon im Bereich des Bauchhöhlenendes im Filet verbleiben und zwar insbesondere dann, wenn von einer mittleren Größe abweichende Fische undloder Fische kritischer Konsistenz wie z. B. aufgetaute Ware, verarbeitet werden.

Genaue Untersuchungen haben ergeben, daß dies darauf zurückzuführen ist, daß das Schabewerkzeug in der bekannten Anordnung eine Starrheit aufweist, die eine zur Vermeidung solcher Fehler erforderliche flexible Anpassung an den jeweils zu bearbeitenden Fisch nicht zuläßt. Andererseits ist dieses Werkzeug hohen Beanspruchungen unterworfen, die eine robuste Ausführung und solide Verankerung erforderlich machen.

Versuche haben nun gezeigt, daß die Häufigkeit obiger Fehler deutlich reduzierter ist, wenn die Schabeklinge in einer zu der Symmetrieebene des Fisches im wesentlichen senkrechten Ebene in gewissen Grenzen elastisch ausweichbar ausgeführt ist, d. h. in einer Ebene, die bei der bekannten Anordnung eine starre Zuordnung mit sich bringt.

Dieses Erfordernis ergibt sich daraus, daß die Schabeklinge, wie in der DE-PS 29 46 042 beschrieben, kurz vor Ankunft des hinteren Bauchhöhlenendes über die Wirbelkörper hinweg mit ihrer Spitze in den Bereich zwischen den Rückenspeichen und dem Ansatz der Rippen oder Wirbelfortsätze zu steuern sind, um die Schabeklinge zu aktivieren. Dieses geschieht bauartbedingt durch Verschwenken des Schabewerkzeuges in einer zu der Symmetrieebene der Rücken- und Bauchführungen parallelen Ebene. Bei der bekannten Anordnung ist für den einzustellenden Abstand der Spitzen der Schabeklingen zueinander im wesentlichen das Dickenmaß maßgeblich, das die Wirbelkörper des größten, für die Bearbeitung vorgesehenen Fisches an der Aktivierungsstelle des Schabewerkzeuges aufweisen. Es ist daraus erkennbar, daß sich ideale Verhältnisse nur für einen eng begrenzten Größenbereich der Fische ergeben, die Häufigkeit der oben beschriebenen Fehler daher außerhalb dieses Bereiches zunehmen muß.

Es hat sich nun überraschend gezeigt, daß die gewünschten Verhältnisse ohne zusätzlichen Aufwand zu erreichen sind, wenn jedes Schabemesser mit seiner Schneidkante in einer Ebene angeordnet ist, wobei die beiden Ebenen sich in Förderrichtung gesehen dachförmig schneiden und jeweils mit der durch die Spalte zwischen den Führungen für die Bauch- und Rückenspeichen bestimmten Führungsebene einen Winkel von jeweils 10° bis 50° einschließen.

Bei einer derartigen Anordnung der Schabemesser ergibt sich eine natürliche Elastizität in der gewünschten Ebene, weil das Schabemesser nicht mehr in dieser Ebene liegt, sondern geneigt zu dieser verläuft.

Bei der Beurteilung so erzeugter Filets ist neben der Reduzierung der o. g. Fehler ein weiterer Vorteil erkennbar, der sich in einer deutlich besseren Schnittqualität im Bereich der Rippen zeigt. Hintergrund dieses Effektes ist, daß die Flexibilität des Fleisches, insbesondere bei kritischer Konsistenz, wie sie bei aufgetauter Frostware vorliegt, begrenzt ist, so daß während des herkömmlichen Schabevorganges eine Überstrapazierung des Fleisches auftritt. Dieser Vorgang hängt damit zusammen, daß dabei die Rippen und damit auch das auf diesem aufliegende Fleisch in eine unnatürliche Lage verformt wird, die die Gefahr einer Überbiegung mit der Folge von "Brüchen" einzelner Muskelfasern mit sich bringt, was sich in einer gewissen Rauhigkeit der Schabefläche äußert. Dieser Mangel behebt sich durch die vorgeschlagene Anordnung dadurch, daß das Abschaben des Fleisches im Bereich der Rippen in deren im wesentlichen natürlicher Lage, d. h. praktisch ohne Biegebeanspruchung des Fleisches erfolgt mit dem Effekt, daß die so erzeugte Trennfläche einwandfrei glatt ist.

Obwohl sich gezeigt hat, daß gewisse Abweichungen zwischen Schabewinkel und Rippen-Ansatzwinkel ohne Einfluß auf das Qualitätsergebnis sind, ist es für extreme Verhältnisse von Vorteil, wenn die Schabemesser innerhalb des angegebenen Winkelbereiches verstellbar angeordnet sind

Zwecks Vermeidung der Gefahr des An- bzw. Durchschnittes der Rippen ist es hilfreich, wenn die Schneidkante jedes Schabemessers eine Innenfase aufweist.

Dadurch, daß die Spitze jedes Schabemessers gegen die Förderrichtung der Fische durch ein Führungshorn verlängert und daß jede Gegenlage an ihrem gegen die Förderrichtung der Fische weisenden Ende kufenförmig ausgebildet ist, ergibt sich ein sicherer und schonender Schabeansatz.

Das Arbeitsfeld des Schabewerkzeuges ist der Bauchhöhlenbereich des Fisches. Um die Funktion des Schabewerkzeuges auf diesen Bereich zu beschränken, ist dieses während der Passage des Fisches lediglich zeitweise zu aktivieren. Zu diesem Zweck ist jedes Schabemesser in seinem Endbereich um eine zu der durch die Führungen für die Bauch- bzw. Rückenspeichen bestimmten Führungsebene senkrecht ausgerichtete Schwenkachse schwenkbar gelagert, so daß es in bekannter Weise im Augenblick der Ankunft des Bauchhöhlenendes in Aktivstellung einschwenkbar ist.

Die erfindungsgemäße Einrichtung wird nachstehend anhand eines in der Zeichnung dargestellten Ausführungsbeispiels näher erläutert.

Es zeigen:

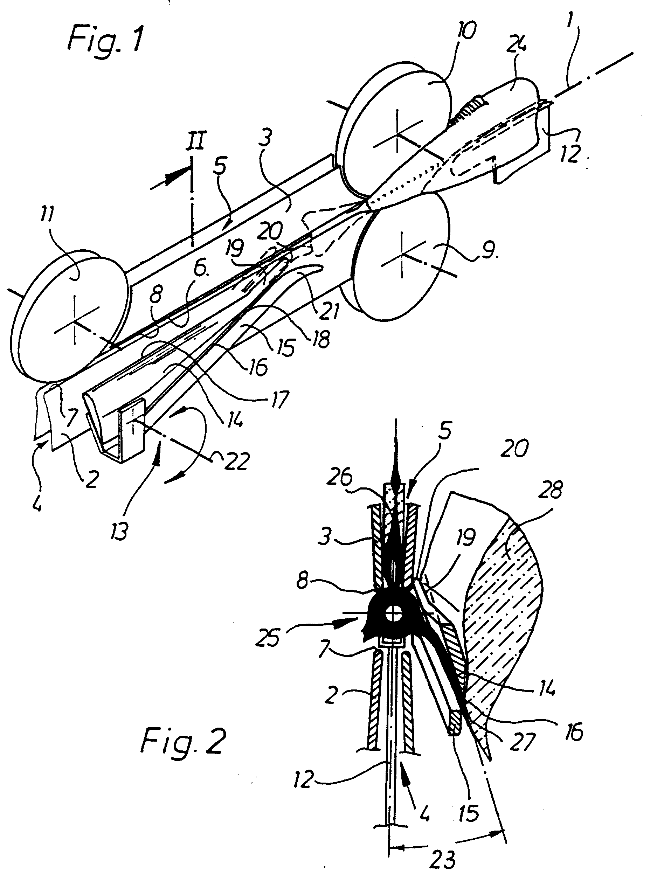

- Fig. 1: eine schematisierte Teilansicht einer mit dem erfindungsgemäßen Schabewerkzeug ausgerüsteten Filetiereinrichtung in axonometrischer Darstellung,
- Fig. 2: einen Querschnitt durch die Einrichtung nach Fig. 1 längs der Schnittlinie II,

In einem nicht gezeigten Gestell einer Filetiermaschine für Fische ist eine Führungsbahn 1 für die Fische ausgebildet. Die Führungsbahn 1 ist durch Paare von Bauchschnittführungen 2 und Rückenschnittführungen 3 bestimmt, die sich oberhalb bzw. unterhalb der Führungsbahn 1 erstrecken und zwischen sich Spalte 4 bzw. 5 und gegenseitig einen seitlichen Spalt 6 belassen, wobei der Spalt 6 durch Führungskanten 7 bzw. 8 begrenzt wird.

Vor den Führungen 2 und 3 und in deren Ebenen befinden sich ein Paar vorzugsweise geschränkt angeordneter Bauchfiletiermesser 9 bzw. Rückenfiletiermesser 10. Im Anschluß an die Rückenschnittführungen 3 ist ein Paar Trennmesser 11 zum Abtrennen der Filets der Fische von dem Grätengerüst in deren Schwanzbereich installiert. Die Förderung der Fische erfolgt durch Schubsättel 12, welche die Fische in ihrer Bauchhöhle aufgesattelt längs der Führungsbahn 1 fördern. Zwischen den Rückenfiletiermessem 10 und den Trennmessern 11 ist in Höhe der Bauchschnittführungen 2 ein Werkzeug 13 zur Ausführung der Rippenschnitte angebracht. Das Werkzeug 13 umfaßt ein Paar Schabevorrichtungen, deren jede neben den Bauchführungen 2 angeordnet ist und je aus einem Schabemesser 14 und einer Gegenlage 15 besteht. Das Schabemesser 14 hat im wesentlichen die Gestalt eines rechtwinkligen Dreiecks, dessen Hypotenuse als Schneidkante 16 ausgebildet ist. Die Anordnung der Schabemesser 14 ist so getroffen, daß sie in bezug auf die Führungsbahn 1 der Fische in Förderrichtung derselben divergierend und gleichzeitig dachförmig ausgerichtet sind, wobei der Winkel 23 zwischen der durch die Spalte 4 und 5 gebildeten Führungsebene und der Schabeebene jedes Schabemessers 14 zwischen 10° und 50° beträgt. Dabei verläuft die lange Kathete 17 in seitlicher Projektion auf die durch die Spalte 4 und 5 bestimmte Führungsebene betrachtet im wesentlichen parallel zu den Führungskanten 7, und weist der Scheitel des mit der längs der Hypotenuse verlaufenden Schneidkante 16 gebildeten spitzen Winkels gegen die Förderrichtung, so daß die Schneidkante 16 sowohl in bezug auf die Stützkante 7, als auch auf die genannte Führungsebene divergierend verläuft. Die Gegenlage 15 ist leistenförmig ausgebildet und kann unterschiedlichen Querschnitt aufweisen, wobei sich eine Ausführung als Stange mit Kreisquerschnitt als besonders anspruchslos und universell verwendbar erwiesen hat.. Die Gegenlage 15 liegt der Schneidkante 16 des Schabemessers 14 außenbündig gegenüber, wobei sie mit der Schneidkante 16 einen im wesentlichen parallelen Spalt 18 begrenzt. Über den Scheitel des besagten Winkels hinausragend ist an jedem Schabemesser 14 ein Führungshorn 19 angebracht, das im wesentlichen in Verlängerung der Schneidkante 16 verläuft und mit seinem vorderen Ende 20 neben der Außenfläche der jeweils zugehörigen Bauchschnittführung 2 liegt. Die Gegenlage 15 ist an ihrem gegen die Förderrichtung der Fische weisenden Ende 21 kufenförmig ausgebildet, wobei dieser Teil ebenfalls neben der Außenfläche der jeweils zugehörigen Bauchschnittführung 2 angeordnet ist.

Das jeweils aus Schabemesser 14 und Gegenlage 15 bestehende Werkzeug 13 ist um eine Schwenkachse 22 schwenkbar gelagert, die zu der durch die Spalte 4 und 5 zwischen den Schnittführungen 2 und 3 bestimmte Führungsebene senkrecht ausgerichtet und im Endbereich des Werkzeuges 13 angeordnet ist.

Die Wirkungsweise der Einrichtung ist folgende:
Ein geköpfter, an seiner Bauchhöhle geöffneter und entweideter Fisch 24 wird mit seiner Bauchhöhle auf einen durch den Förderer herangeführten Schubsattel 12 so aufgesattelt, daß sein Schwanz in Förderrichtung weist. Nach Ausrichtung durch nicht dargestellte Ausrichtmittel wird der Fisch 24 den Bauchfiletiermessern 9 und den Rückenfiletiermessem 10 zugeführt, welche den Fisch 24 von der Schwanzwurzel beginnend zu beiden Seiten der Bauch- bzw. Rückenspeichen 26 bis an die Wirbelsäule 25 heran einschneiden. Beim weiteren Vorschieben des Fisches 24 tauchen die Bauchschnittführungen 2 und die Rückenschnittführungen 3 in die entsprechenden Einschnitte ein und übernehmen die Führung des Fisches 24 ,indem sie die Bauchspeichen und die Rückenspeichen 26 in den Spalten 4 bzw. 5 zwischen sich aufnehmen. Die im Bereich der Bauchhöhle befindlichen Rippen 27 werden dabei in dem seitlichen Spalt 6 zwischen den Bauchschnittführungen 2 und den Rückenschnittführungen 3 geführt. Der Fisch 24 wird so dem Werkzeug 13 zum Ablösen der Filets 28 von den Rippen 27 zugeleitet, welches zunächst in einer Stellung unterhalb der Führungskanten 7 der Bauchschnittführungen 2 , d. h. neben diesen verharrt, um den Schwanzteil des Fisches 24 Ober sich hinwegzuleiten. Bei Ankunft des Bauchhöhlenendes, welches mit dem vorauslaufenden Ende des Schubsattels 12 zusammenfällt, 'wird mittels eines geeigneten, mit dem Schubsattelförderer synchron mitlaufenden Kurvengetriebes (nicht gezeigt) das Werkzeug 13 entgegen dem Uhrzeigersinn um die Schwenkachse 22 geschwenkt und dadurch das Schabemesser 14 und die Gegenlage 15 angehoben, so daß das Schabemesser 14 mit dem vorderen Ende 20 des Führungshorns 19 neben der zugehörigen Rückenschnittführung 3 zu liegen kommt. Das kufenförmige Ende 21 der Gegenlage 15 liegt dabei etwa in Höhe der Führungskanten 7 der Bauchschnittführungen 2. Aufgrund dieser Steuerbewegung durchdringt das Führungshorn 19 mit seinem vorderen Ende 20 das Fleischband an den Flanken der Wirbelsäule 25 , welches die Filets 28 im Schwanzbereich noch mit dem Grätengerüst verbindet, was bewirkt, daß das Führungshorn 19 in den Kehlbereich zwischen den Rückenspeichen 26 und den Ansatzstellen der Rippen 27 an der Wirbelsäule 25 eindringt. Dabei wurden die vorderen Enden 20 durch die zu passierenden Wirbelkörper der Wirbelsäule 25 elastisch nach außen gedrängt, so daß das besagte Fleischband unmittelbar an den Flanken der Wirbelkörper abgetrennt wurde. Gleichzeitig unterläuft das kufenförmige Ende 21 der Gegenlage 15 die Rippen 27 von der Bauchhöhlenseite her, so daß diese in den Spalt 18 zwischen der Gegenlage 15 und der Schneidkante 16 des Schabemessers 14 einlaufen. Aufgrund der Divergenz der Schneidkanten 16 gegenüber der Förderbewegung des Fisches 24 dringt nun die Schneidkante auf der Oberseite der Rippen 27 in Richtung auf deren Enden zu vor, wobei der Spalt 18 als Abstreifblende fungiert, d. h. das auf den Rippen 27 aufliegende Filetfleisch von diesen abgelöst wird.

Die nunmehr noch über Fleischbänder an den Flanken der Wirbelsäule 25 im Schwanzbereich mit dem Grätengetüst zusammenhängenden Filets 28 werden anschließend unter Durchtrennen dieser Fleischbänder mittels der Trennmesser 11 freigeschnitten. Seitlich der Bauchschnittführungen 2 können Filet-Transportbänder angeordnet sein, die die Filets auf ihrer Hautseite liegend übernehmen und direkt beispielsweise einer Enthäutemaschine zuführen.

### Bezugszeichenliste

- 1: Führungsbahn
- 2: Bauchschnittführung
- 3: Rückenschnittführung
- 4: Spalt
- 5: Spalt
- 6: Spalt
- 7: Führungskante
- 8: Führungskante
- 9: Bauchfiletiermesser
- 10: Rückenfiletiermesser
- 11: Trennmesser
- 12: Schubsattel
- 13: Werkzeug
- 14: Schabemesser
- 15: Gegenlage
- 16: Schneidkante
- 17: lange Kathete
- 18: Spalt
- 19: Führungshom
- 20: vorderes Ende
- 21: Ende
- 22: Schwenkachse
- 23:
- 24: Fisch
- 25: Wirbelsäule
- 26: Rückenspeiche
- 27: Rippe
- 28: Filet

## Patentansprüche

1. Einrichtung zum Ablösen des Fleisches von dem Grätengerüst von Fischen, insbesondere im Bereich der Rippen nach dem Freischneiden der Bauch- und Rückenspeichen, mit einem Förderer, der den Fisch mit dem Schwanz voraus fördert, wobei die Führung des Fisches durch in den besagten Freischnitten eingreifende und jeweils die Bauch- bzw. Rückenspeichen in einem Spalt (4 bzw. 5) zwischen sich aufnehmende flächige Führungen (2 und 3) erfolgt, die untereinander einen seitlichen, durch Führungskanten (7 bzw. 8) begrenzten Spalt (6) für die Führung der Rippen oder seitlichen Wirbelfortsätze im Bereich ihrer Ansätze an der Wirbelsäule ausbilden, mit einem Werkzeug (13) zum Herauslösen der Rippen, bestehend aus je einem, zu beiden Seiten der Bahn der Fische angeordneten und gegen die Förderrichtung im wesentlichen spitz zulaufenden Schabemesser (14) mit einer Schneidkante (16) und einer dieser gegenüberliegenden mit ihr einen Spalt bildenden Gegenlage (15), sowie mit Mitteln zum Steuern der Schabemesser (14) mit ihrer Spitze aus einem Bereich neben den Führungen (2) für die Bauchspeichen in einen Bereich neben den Führungen (3) für die Rückenspeichen (26) kurz vor Ankunft des vorauslaufenden schwanzseitigen Bauchhöhlenendes des Fisches, **dadurch gekennzeichnet,** daß jedes Schabemesser (14) mit seiner Schneidkante in einer Ebene angeordnet ist, wobei die beiden Ebenen sich in Förderrichtung gesehen dachförmig schneiden und jeweils mit der durch die Spalte (4, 5) zwischen den Führungen (2, 3) für die Bauch- und Rückenspeichen bestimmten Führungsebene einen Winkel (23) von jeweils 10° bis 50° einschließen.

2. Einrichtung nach Anspruch 1 , **dadurch gekennzeichnet,** daß die Schneidkante (16) jedes Schabemessers (14) in bezug auf die Stützkante (7) sowie die besagte Führungsebene in Förderrichtung der Fische divergierend verlaufend angeordnet ist.

3. Einrichtung nach Anspruch 1 oder 2 , **dadurch gekennzeichnet,** daß die Schabemesser (14) innerhalb des angegebenen Winkelbereiches verstellbar angeordnet sind.

4. Einrichtung nach einem der Ansprüche 1 bis 3 , **dadurch gekennzeichnet,** daß die Schneidkante (16) jedes Schabemessers (14) eine Innenfase aufweist.

5. Einrichtung nach einem der Ansprüche 1 bis 4 , **dadurch gekennzeichnet,** daß die Spitze jedes Schabemessers (14) gegen die Förderrichtung der Fische durch ein Führungshorn (19) verlängert ist.

6. Einrichtung nach einem der Ansprüche 1 bis 5 , **dadurch gekennzeichnet,** daß jede Gegenlage (15) an ihrem gegen die Förderrichtung der Fische weisenden Ende (21) kufenförmig ist.

7. Einrichtung nach einem der Ansprüche 1 bis 6 , **dadurch gekennzeichnet,** daß jedes Schabemesser (14) in seinem Endbereich um eine zu der durch die Führungen (2 und 3) für die Bauch- bzw. Rückenspeichen bestimmten Führungsebene senkrecht ausgerichtete Schwenkachse (22) schwenkbar gelagert ist.

## Claims

1. Equipment for detaching the meat from the skeleton of fish, especially in the region of the ribs after the cutting free of the belly and back spokes, comprising a conveyor which conveys the fish with the tail foremost, wherein the guidance of the fish is effected by areal guides (2 and 3) which engage in the said freeing cuts and each time receive the belly spokes or back spokes in a gap (4 or 5) therebetween and which together form a lateral gap (6), which is bounded by guide edges (7 or 8), for the guidance of the ribs or lateral vertebral processes in the region of their attachments to the spinal column, a tool (13) for the releasing of the ribs, consisting of a respective scraping knife (14), which is arranged at each of the two sides of the path of the fish and runs substantially into a point against the conveying direction, with a cutting edge (16) and a counterbearing (15) disposed opposite thereto and forming a gap therewith, as well as means for the guiding of the scraping knife (14) by its point out of a region near the guides (2) for the belly spokes into a region near the guides (3) for the back spokes (26) shortly before arrival of the leading, tail-sided belly cavity end of the fish, characterised thereby that each scraping knife (14) is arranged with its cutting edge in a plane, wherein the two planes intersect in roof-shape seen in conveying direction and each time include an angle (23) of respectively 10° to 50° with the guide plane determined by the gaps (4, 5) between the guides (2, 3) for the belly spokes and back spokes.

2. Equipment according to claim 1, characterised thereby that the cutting edge (16) of each scraping knife (14) is arranged to extend divergently, in conveying direction of the fish, with respect to the support edge (7) as well as the said guide plane.

3. Equipment according to claim 1 or 2, characterised thereby that the scraping knives (14) are arranged to be adjustable within the stated angular range.

4. Equipment according to one of claims 1 to 3, characterised thereby that the cutting edge (16) of each scraping knife (14) has an inner bevel.

5. Equipment according to one of claims 1 to 4, characterised thereby that the point of each scraping knife (14) is prolonged by a guide horn (19) against the conveying direction of the fish.

6. Equipment according to one of claims 1 to 5, characterised thereby that the counterbearing (15) is skid-shaped at its end (21) facing against the conveying direction of the fish.

7. Equipment according to one of claims 1 to 6, characterised thereby that each scraping knife (14) is mounted in its end region to be pivotable about a pivot axis (22) aligned perpendicularly to the guide plane determined by the guides (2 and 3) for the belly spokes and back spokes.

## Revendications

1. Dispositif pour détacher de la chair du squelette de poissons, notamment dans la zone des côtes après le découpage des filets ventraux et des filets dorsaux, comportant un transporteur, qui fait avancer le poisson avec la queue en avant, et dans lequel le guidage du poisson s'effectue au moyen de guides plans (2 et 3), qui s'engagent dans lesdites découpes et reçoivent, respectivement les filets ventraux ou les filets dorsaux dans une fente (4 ou 5) formée entre eux et qui définissent entre eux une fente latérale (6), délimitée par des bords de guidage (7 et 8), pour le guidage des côtes ou des apophyses latérales des vertèbres dans la zone de leurs raccordements à la colonne vertébrale, et comportant un outil (13) servant à retirer les côtes et constitué par des couteaux de raclage respectifs (14) qui sont disposés des deux côtés de la trajectoire de déplacement des poissons et convergent sensiblement en pointe en sens opposé à la direction d'avance et qui comportent un tranchant (16) et un contre-appui (15), situé en vis-à-vis de ce dernier et définissant avec lui une fente, ainsi que des moyens pour commander les couteaux de raclage (14) en amenant leur pointe depuis une zone située à côté des guides (2) pour les filets ventraux, dans une zone située à côté des guides (3) pour les filets dorsaux (26), peu avant l'arrivée de l'extrémité de la cavité abdominale du poisson, qui est située en avant, du côté de la queue, caractérisé en ce que chaque couteau de raclage (14) est disposé de telle sorte que son tranchant soit dans un plan, les deux plans se coupant sous forme d'un toit lorsqu'on regarde dans la direction d'avance et faisant chacun un angle (23) de 10° à 50° respectivement, avec le plan de guidage défini par la fente (4, 5) entre les guides (2, 3) pour les filets ventraux et les filets dorsaux.

2. Dispositif selon la revendication 1, caractérisé en ce que le tranchant (16) de chaque couteau de raclage (14) est disposé de manière à diverger par rapport au bord d'appui (7) ainsi que par rapport audit plan de guidage, dans la direction d'avance du poisson.

3. Dispositif selon la revendication 1 ou 2, caractérisé en ce que les couteaux de raclage (14) sont montés réglables dans la plage angulaire indiquée.

4. Dispositif selon l'une des revendications 1 à 3, caractérisé en ce que le tranchant (16) de chaque couteau de raclage (14) possède un biseau intérieur.

5. Dispositif selon l'une des revendications 1 à 4, caractérisé en ce que la pointe de chaque couteau de raclage (14) est prolongée par une come de guidage (19) en sens opposé à la direction d'avance des poissons.

6. Dispositif selon l'une des revendications 1 à 5, caractérisé en ce que chaque contre-appui (15) est réalisé en forme de ski au niveau de son extrémité (21) dirigé en sens opposé à la direction d'avance des poissons.

7. Dispositif selon l'une des revendications 1 à 6, caractérisé en ce que chaque couteau de raclage (14) est, dans sa partie d'extrémité, monté de manière à pouvoir pivoter autour d'un axe de pivotement (22) orienté perpendiculairement au plan de guidage défini par les guides (2 et 3) pour les filets ventraux et les filets dorsaux.
